# EUROPEAN PATENT SPECIFICATION

(11) **EP 1 681 834 B1**
(45) Date of publication and mention of the grant of the patent: **24.10.2007**
(21) Application number: 06300002.0
(22) Date of filing: 02.01.2006
(51) Int. Cl.: H04L 29/08

(54) **Method for assigning a priority to a data transfer in a network, and network node using the method**
Verfahren zum Zuordnen einer Priorität zu einer Datenübertragung in einem Netzwerk und Netzwerksknoten, der das Verfahren verwendet
Procédé d'assignation de priorités au transfert de donées dans un réseau et noeud de réseau utilisant le procédé

(30) Priority: 12.01.2005 EP 05000466
(43) Date of publication of application: 19.07.2006
(73) Proprietor: Thomson Licensing S.A., 92100 Boulogne-Billancourt (FR)
(72) Inventor: Hepper, Dietmar, 30419 Hannover (DE); Blawat, Meinolf, 30659 Hannover (DE); Klausberger, Wolfgang, 30519, Hannover (DE); Kubsch, Stefan, 31559, Hohnhorst (DE); Li, Hui, 30539 Hannover (DE)
(74) Representative: Rittner, Karsten

(56) References cited:
- EP-A- 1 427 170
- WO-A-01/57729
- US-A1- 2002 083 117
- US-A1- 2002 161 836
- US-A1- 2004 064 575
- US-A1- 2004 148 287

## Description

### Field of the invention

This invention relates generally to network communication. In particular, the invention relates to a method for assigning a priority to a data transfer in a network, and a network node using the method.

### Background

In networks such as e.g. Distributed Storage Systems (DSS), a data transfer can be understood as a task to be done. Data transfers are often responses to requests or tasks. A task may be e.g. a search task or a data transfer task, with a characteristic flow of messages taking place between the nodes that are involved in the task. Usually, several (data transfer) tasks may occur in parallel at the same time. This may lead to conflicts or bottleneck situations due to limited capacity in terms of bandwidth, storage space or other parameters.

Different nodes in a peer-to-peer based network, e.g. an OwnerZone as described in the European Patent Application EP 1 427 141, may try to allocate resources of another node such as storage space or transfer rate. If the available resources are not sufficient to manage all requests, smart ways may be found to get around such bottlenecks or conflicts. This shall be done automatically, i.e. without user interaction. In some cases however it would be good if the user or an application had a possibility to modify an automatically found solution.
Document US 2004/148287 discloses a method of sending a first request from a local peer to a remote peer for desired content-upon receiving a list of the available desired content from the remote peer, the local peer selects an entry from the list and requests said entry in a second request from the remote peer.

Conflict and bottleneck management implies communication between the nodes, based on a number of control messages. These control messages may also be part of a language, e.g. a Distributed Storage Communication and Control Language.

### Summary of the Invention

The present invention provides a possibility to manage such conflicts and bottlenecks automatically, and simultaneously provides for a user or an application means to modify the automatically achieved results. It is based on the definition of a dual layer priority system, comprising first layer so-called implicit priority and second layer so-called explicit priority, wherein implicit priorities generally overrule explicit priorities. Therefore the explicit priority layer is only exploited in case of identical implicit priority of tasks. Each of the two layers may be subdivided into different levels.

Advantageously, the present invention requires only little communication effort in the network. Further, it may improve data throughput in the network, exploit storage capacity better and improve availability of data.

According to the invention, conflicts and bottlenecks in terms of storage space, transfer rate, node availability etc. are managed or avoided by using a set of priorities and rules applied by the nodes in the network. While the rules are inherent in the nodes, the priorities are calculated in two steps, as dual layer priorities. The first layer are so-called implicit priorities that are defined in terms of rules or relations, which all involved nodes comply with. The second layer priorities are called explicit priorities, and are user or application defined.

The two-stage priority concept has the advantage that it uses task- and/or node-inherent priorities, which are called "implicit priorities" here and which need not be defined by a user or application, while the additional explicit priorities involve the assignment of priority levels as an information that can be exchanged and altered by the user or by an application. In other words, implicit priorities can be generated automatically without user input. A user or application can do the assignment or alteration of explicit priority levels when considered appropriate.

An advantage of the present invention is that conflicts and bottlenecks, e.g. in a DSS implemented as an OwnerZone, can be properly managed or avoided, thus improving data throughput, better exploiting storage capacity, improving data availability, and preventing network blockings.

The method according to the invention is a method for assigning a priority to a data transfer in a network, the data transfer comprising a first node sending out a first request indicating a particular data unit or particular type of data units, at least a second node receiving and analysing the first request, the second node detecting that it may provide the requested data unit, and sending to the first node a first message indicating that it may provide the requested data unit, the first node receiving and selecting the first message and sending a second request to the second node, requesting transfer of the particular data unit, and the second node transmitting the particular data unit upon reception of the second request. Said method comprises in a first step the first node assigning an identifier to the first request or the second request or both, the identifier corresponding to a first priority, in a second step the second node evaluating the identifier corresponding to the first priority and, based on the identifier, calculating a second priority, and in a third step the second node transferring the particular requested data unit, wherein the calculated second priority is assigned to the transfer. It should be noted that the transfer of the requested data unit needs not necessarily be directed to the first node that launched the requests. It is also possible that a third node is the receiver of the transferred data unit, and the first node is only the initiating node, e.g. because it has a user interface, schedule manager etc. In this case it will be useful for the first node to send at least the second request also to said third node.

A corresponding device contains respective means for executing each of the method steps.

The above-mentioned particular data unit or particular type of data units may be e.g. video data of a movie with a defined title, or video data of all available movies in which a particular defined actor is involved, or the like. This information can be associated to the data units, e.g. as a metadata mark, and can be e.g. in XML format.

Advantageous embodiments of the invention are disclosed in the dependent claims, the following description and the figures.

### Brief description of the drawings

Exemplary embodiments of the invention are described with reference to the accompanying drawings, which show in
Fig.1 a scenario with two real-time streaming transfers with sufficient bandwidth;
Fig.2 two streaming transfers with insufficient bandwidth;
Fig.3 a scenario with a real-time streaming transfer and a simultaneous file transfer;
Fig.4 a scenario with two file transfers, wherein the explicit priority of one transfer task is modified;
Fig.5 two file transfers with the second requested transfer starting before the first;
Fig.6 two file transfers where the later has inherited its priority from the search task;
Fig.7 a flow chart of the inventive method; and
Fig.8 an example scenario for copying content in case of capacity limitation.

### Detailed description of the invention

The invention is described exemplarily for an OwnerZone, which is a peer-to-peer based network structure, wherein the nodes have individual node identifiers and a common peer-group identifier, and wherein the nodes that belong to the peer-group may freely communicate with each other, exchange messages and other data etc. It may also be applied to other types of networks, and it is particularly advantageous for networks whose nodes organize themselves quite autonomously.

### 1. Priority Concept

The present invention introduces the notion of a two-stage concept involving the distinction between first-layer and second-layer priorities: first-layer or implicit priorities are relative priorities, or priority relations that are complied with by the included nodes, e.g. the peers in the OwnerZone. They have no explicit value, e.g. numerical priority level or number, associated with them. The set of implicit priorities thus represents an inherent "knowledge" of the nodes, i.e. depends on a set of rules they comply with. Advantageously, implicit priorities can be generated automatically, so that a user or application needs not define them. Second-layer or explicit priorities involve the assignment of priority levels, e.g. numbers or other identifiers, as a piece of information that can be modified or removed. A user or application can do the assignment or modification if considered appropriate. Explicit priority levels may be relative, e.g. "high" and "low", or integer numbers, or generally any ranked terms. The explicit priority level of a task is assigned to a task, and can be compared to the explicit priority of another task to derive a decision if necessary, e.g. when deciding which of the two tasks gets higher priority for hardware access, memory space, processing power or similar.

### 1.1 Implicit Priorities

Nodes are implemented compliant with the following implicit priority rules or relations, in order to help smoothly managing transfers and avoid conflicts and bottlenecks among the nodes and their actions in an OwnerZone.

The fundamental rule is: "First come, first served." It is implemented evaluating e.g. the *TaskInitTime* parameter that is defined by the node that sets up a task and establishes the start time of the task. A task may be e.g. a search task or a data transfer task, and has a characteristic flow of messages taking place between the nodes that are involved in the task. Every node in the OwnerZone takes care in all its actions that a task initiated at an earlier time has priority over a task initiated at a later time. A message received at an earlier time has usually priority over a message received at a later time. That means that a node generally responds to requests that it received in the sequence of the initiation of the requests, given by their *TaskInitTime* parameter. A common time base existing in all involved nodes is therefore helpful.

One aspect of the invention is that, as an exception from this rule, a data transfer task may inherit its priority to a certain extent from a preceding search task that it relates to. This is useful because a search task may be launched in general with the intention of setting up a data transfer task for the piece of content found. For this purpose, the node makes sure that a transfer of a piece of content relating to an earlier search request has, within a granted time period T_{wft} ("wait for transfer" time, e.g. 5 seconds) after the *TaskInitTime* of the search request, priority over a transfer of a piece of content related to a later search request. However, other tasks may still have higher priority, e.g. the node may make an exception to this deviation in case of a necessary instantaneous start of the transfer, e.g. for a task of recording a live stream.

As a second rule, a task or data transfer is allowed to be started only if the resources that it needs are available, considering all other running or scheduled transfers that involve the respective nodes. That means that a node, before initiating a task, first checks the resources of the nodes that it intends to involve in the task, or maybe of all nodes in the OwnerZone to get an overview. It initiates a transfer for a particular time and includes only those nodes, which have at that time sufficient storage capacity and transfer capacity, i.e. rate and number of possible transfers, available. This refers to both, source and destination nodes. If necessary, the node delays the intended transfer until at a later time the transfer is possible. The nodes involved in the transfer allocate respective resources. They can be de-allocated e.g. by cancelling the task. Thus, a situation where two tasks block each other, and thus the whole network, is prevented.

As a third rule, running transfers should not be interrupted, unless they are explicitly cancelled by the node that initiated them. That means a node may not cancel running transfers from other nodes for getting resources to set up its own transfer. Only the node that initiated a transfer is permitted to cancel it. Then it can set up another transfer if necessary.

As a fourth rule, a transfer is only allowed to be scheduled for a time when the resources it occupies will be available, i.e. after a running transfer has been or will be completed, considering all other running or scheduled transfers involving the respective nodes. That means that a node first checks the availability of the resources it may involve in a data transfer task for a particular time. It initiates a transfer only for those nodes and for that time when sufficient storage capacity on the destination node is available and sufficient transfer capacity, i.e. rate and number of transfers, on both source and destination nodes is available. Then the involved nodes allocate the respective resources for the time when the transfer shall take place. Resources can be de-allocated by cancelling the transfer task at any time, whether the transfer has started already or not. Therefore each node that may provide its resources to others may have a timetable, to control when the resources are "booked", and by which other node or for which purpose.

As a fifth rule, real-time or streaming transfer has higher priority than non-real-time or file transfer. In a more generalized view, real-time data are data whose source data rate cannot be reduced without reducing the reproduction quality. The idea is that a file transfer can in general take place at any bit rate and over any duration feasible according to network resources, while a real-time or streaming transfer e.g. of audio and/or video data is required to take place with accurate timing, and may involve the necessity of reproducing the content for being consumed, e.g. watched or listened, by a user. A node may slow down or accelerate a running non-real-time/file transfer by changing both bit rate and transfer duration, e.g. using a certain request message like 'ModifyTransfer-Request("modify")'. The product of transfer rate and transfer duration is the file size and thus remains unchanged. One possibility for the node that initiated a task to prohibit this is to introduce a task-related parameter such as *AlloraTransferSpeedChange* and setting it "false".

A sixth rule is that transfers for recording have always a higher priority than transfers for playback. This rule is subordinate to the previous one, i.e. a file transfer always has lower priority than a streaming transfer. It may be assumed that there is a time limitation for recording a piece of content, since it may be available now but not later, while playback of a piece of content could also be done at a later time. Therefore, if a recording task competes with a playback task, the node will preferably assign resources to the recording task. It may even cancel a playback task for enabling a recording task. This may happen on the application or user level or automatically if generally permitted by the application or user. E.g. if a playback transfer has been scheduled for a certain time and an application intends to record another piece of content during the same time while the resources would not allow this, the application may cancel the scheduled playback transfer and schedule the new recording transfer instead.

This situation may occur e.g. in a home network with two recording devices, a playback device, a receiver and a display device. While the user watches on the display device a movie that is played back from the playback device, one of the recording devices is recording a video stream coming from the receiver. Assuming that the storage of the recording device is full after a while, and further assuming that the network and the recording devices are able to continue the recording seamlessly on the second recording device, then probably the traffic on the network will be higher during the switch from the first to the second recording device. This additional traffic is however necessary for recording, and thus has higher priority than the playback data. In this situation, it is acceptable if the playback is shortly interrupted in order to have the recorded data consistent.

### 1.2 Explicit Priorities

In addition to the above relative implicit priorities, the present invention uses optional explicit priority levels such as "low" and "high" or integer numbers, or any ranked terms in general, based on an explicit *Priority* parameter that can be associated with a task. The explicit *Priority* parameter can optionally be assigned to a task e.g. by the node that initiates the task, or by a user. It may also be regarded as a matter of an application to make use of explicit priority levels. A node is able to modify the *Priority* parameter, and thus the explicit priority of a task, by sending a request message (e.g. 'ModifyTransfer-Request("modify")') to the respective other nodes involved in the task.

In any case, implicit or first-layer priorities overrule explicit priorities. Consequently, explicit priority levels are exploited only when tasks have identical implicit priorities. If a device shall run more than one task at a time, it rates these tasks according to their implicit priorities and, in case of identical implicit priority, according to their explicit priority levels if these have been assigned, and provides its resources according to this rating.

A node may only be allowed to modify explicit priority levels of a task that it has not initiated itself, if the associated user or application running on that node has provided it with the correct UseKey. This is a parameter associated with the respective piece of content, which has optionally been defined by a user for this purpose and may relate e.g. to a particular interest group of users. An explicit priority level may further be modified through the node that runs the application that initiated the task, or in one embodiment through any node in an OwnerZone. In this case anybody in the OwnerZone can modify the explicit priority level of any task that has no associated *UseKey* parameter.

The following is an example in which two explicit priority levels "low" and "high" are defined, but it can be applied to any scheme of priority levels. If no explicit priority level has been defined for a task A, the following rule shall be applied for treating its undefined (or default) value:
if another, maybe competing, task B with identical implicit priority has an explicit priority level being "high", then the undefined (or default) explicit priority of task A shall be regarded as "low";
if another, maybe competing, task B with identical implicit priority has an explicit priority level being "low", then the undefined (or default) explicit priority of task A shall be regarded as "high".

This means that an explicit or second-level "high" priority is assigned to a task only if, and with the intention that, it shall be treated as more important than other tasks of identical implicit priority, and vice versa for a "low" level priority.

If possible, a task with a higher implicit or explicit priority than others must be implemented to get its requirements better satisfied than others, in terms of storage capacity, transfer rate, etc. A task set at lower explicit priority should be implemented with the remaining capabilities, after processing above higher priority tasks.

### 1.3 Implementation of Priority Rules

For implementing the above priority rules, each node may store all running and/or scheduled tasks in which it is involved in a "Task and Schedule Database". The tasks are stored in serial order according to the time when they were initiated (according to their *TaskInitTime),* and identified by their respective task identifiers *TaskID.* A task is removed from the database upon its completion. Each node applies the above-described priority related rules when initiating or serving requests.

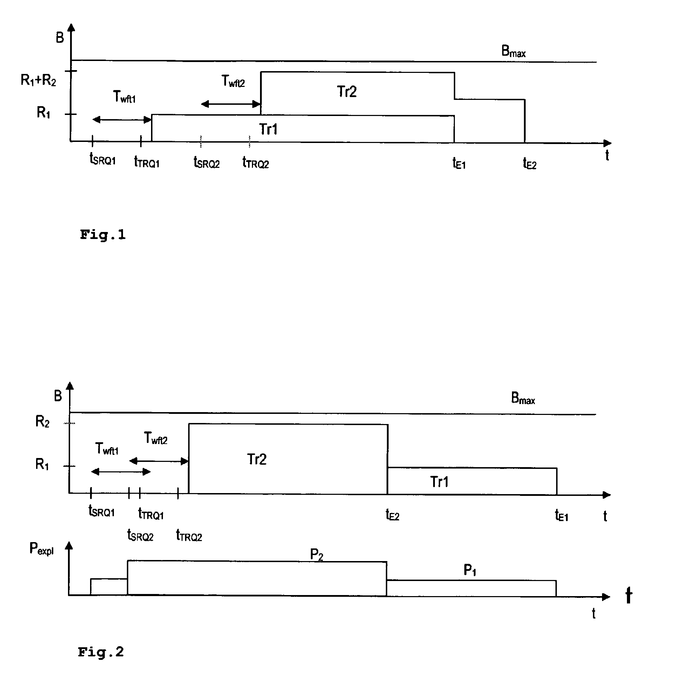

Fig.1 shows a scenario with two real-time streaming transfers Tr1,Tr2 having the same implicit and explicit priorities, when sufficient bandwidth B is available. The first transfer Tr1 is requested at T_{TRQ1} and is the response to a search request at t_{SRQ1}. It is however started only at a defined wait-for-transfer time span T_{wft1} after the request, in order to check if another transfer with a higher priority is requested. In Fig.1 this is not the case, so that at t_{SRQ1}+T_{wft1} the first transfer Tr1 begins. While the first transfer Tr1 is running, a second search request at t_{SRQ2} leads to a second transfer request at t_{TRQ2}.

The second transfer Tr2 may start at t_{SRQ2}+T_{wft2} because the available data rate or bandwidth Bₘₐₓ is higher than the sum of required data rates R₁+R₂. The transfer request at t_{TRQ1} may also come later than T_{wft1} after the search request t_{SRQ1}.

Fig.2 shows a situation where a second search request comes at a time t_{SRQ2} that is within T_{wft1} after the first search request. Moreover, the priority P2 of the second transfer Tr2 is higher than the priority P1 of the first transfer Tr1, e.g. due to an explicit priority if both implicit priorities are equal. There is however not enough bandwidth available for simultaneously running both transfers. Consequently, since t_{SRQ2} < t_{SRQ1}+T_{wft1}, the second transfer Tr2 is started first, while the other transfer Tr1 that was requested earlier is started at t_{E2}, after Tr2 is finished. This is the earlier mentioned exception to the first-come first-served rule shown in Fig.1 If in Fig.2 the second search request came a little later, i.e. t_{SRQ2} > t_{SRQ1}+T_{wft1}, then the first transfer Tr1 had been started if both have same implicit priorities, e.g. both are real-time streaming transfers.

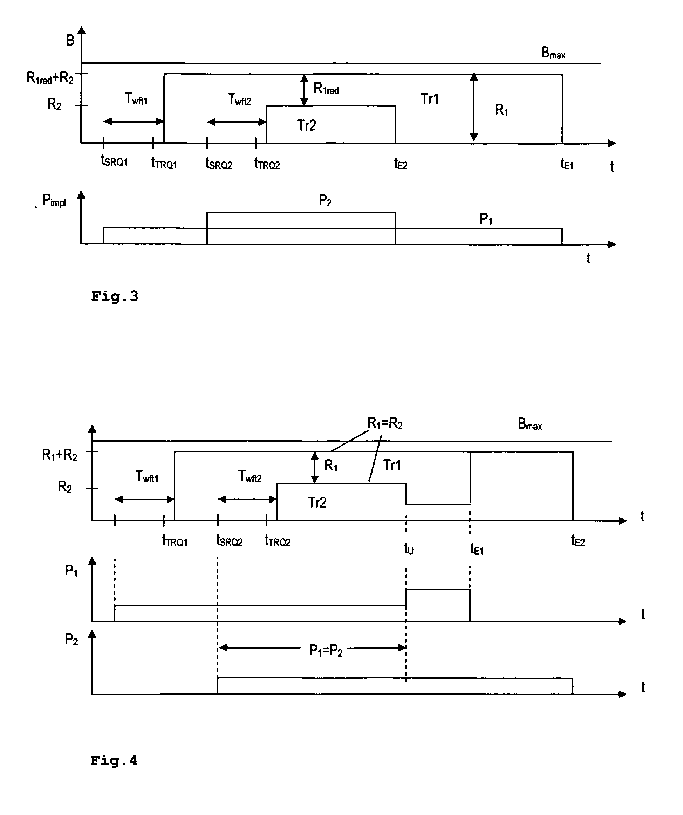

Fig.3 shows a situation where the second search request is later, i.e. t_{SRQ2} > t_{SRQ1}+T_{wft1}, so that the first transfer Tr1 has already been started. The second search request has however a higher priority, e.g. Tr1 is a file transfer and Tr2 is a real-time streaming transfer, and the available bandwidth Bₘₐₓ is not sufficient for running both transfers in parallel: Bₘₐₓ < R₁+R₂. In this case, the second transfer Tr2 is started anyhow at t_{SRQ2}+T_{wft2} because of its higher priority, and the running first transfer Tr1 gets only reduced data rate R_{1red} while Tr2 is running: Bₘₐₓ > R_{1red}+R₂.

A small bandwidth rest Bₘₐₓ-R_{1red}-R₂ remains free, in order to enable communication messages in the network. After the second transfer Tr2 is finished at t_{E2}, the first transfer gets its full bandwidth R₁ again. The effect is that the file transfer Tr1 takes somewhat longer, while the streaming data transfer Tr2 may be done in real-time. The bit rate adaptation for Tr1 during Tr2 has no impact on the data quality, because Tr1 is no real-time data. Advantageously, both transfers do not block each other, and even leave bandwidth capacity for network communication.

Fig.4 shows a situation where explicit priority is used. At T_{SRQ1} a first search request is launched in the home network leading to a first transfer Tr1 that starts at t_{SRQ1}+T_{wft1} with a first implicit priority P₁. Later, at t_{SRQ2} a second search request leads to a second transfer Tr2 at t_{SRQ2}+T_{wft2} with a second implicit priority P₂ that is equal to P₁. Both are file transfers and have also the same explicit priorities, both low, undefined or high. Therefore, both transfers get the same data rate: R₁=R₂. After a while however, at tᵤ, the user decides to change the priority of the first transfer Tr1, e.g. because the transfer Tr1 writes to a removable disc that the user wants to have very soon. For this purpose, the user may change the explicit priority of the first transfer Tr1 to be higher, as shown in Fig.4, or alternatively change the explicit priority of the second transfer Tr2 to be lower. As a result, the first transfer gets after t_{U} more data rate and is finished sooner, at t_{E1}. After that time, the second transfer Tr2 can get more data rate, so that in the scenario shown in Fig.4 the total time required for both transfers is the same.

Though the described basic mechanisms are shown exemplarily for only two transfers, they can be used for any number of transfers, and they can be combined. It is e.g. possible that in Fig.4 after t_{E1} and before t_{E2} another transfer with higher priority is requested and started that uses the mechanism according to Fig.3.

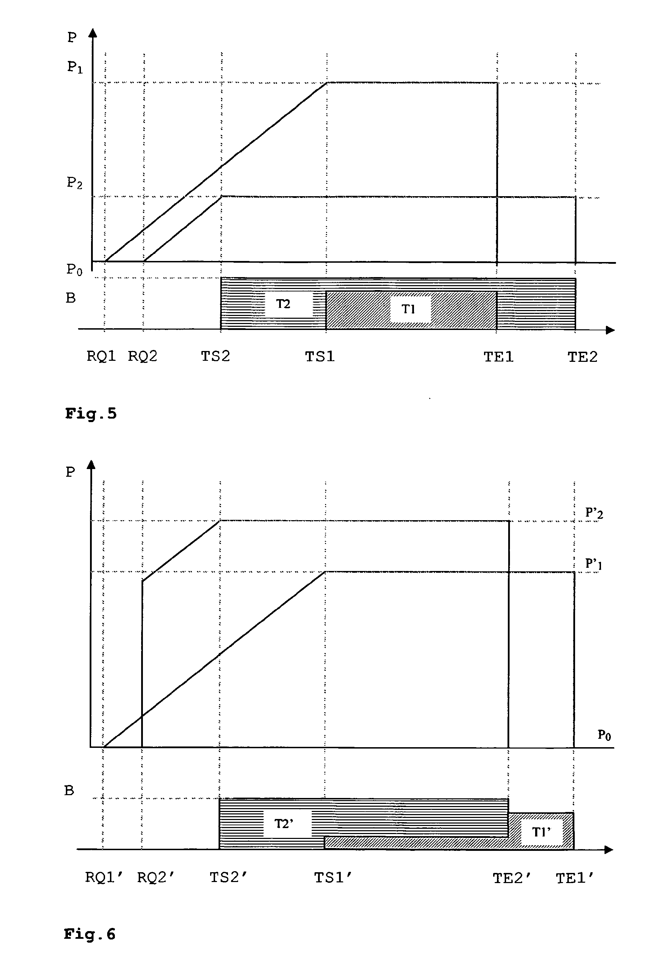

Fig.5 shows another embodiment of the invention. A first request for a file transfer RQ1 and a second request for a file transfer RQ2 are launched shortly after another. Their priorities P may be understood as continuously rising, starting from a default value P₀, thus implementing the first-come first-served rule. The second request RQ2 is answered quicker, and the corresponding transfer T2 may start at TS2 (maybe after a wait-for-transfer period T_{wft} after the answer), while the content relating to the first request RQ1 is not yet found, e.g. because the node having it is busy. The priority P₂ of the running transfer T2 remains constant, while the priority of the first request rises further until the request is answered and the transfer T1 starts. The priority remains at the value that it has when the transfer starts TS1. Since the priority of the first transfer T1 is higher, and both transfers T1,T2 are non-real-time file transfers, the first transfer T1 gets in this embodiment more bandwidth than the other transfer T2. Therefore it may be finished sooner at TE1, which is intended because it was requested earlier.

A similar situation is shown in Fig.6. Here however the second request RQ2' has a higher priority than the first request RQ1'. E.g. the user has given this request RQ2' a higher explicit priority. Both requests are for non-real-time file transfers. When the second request is answered, the transfer inherits its priority P2' from the request RQ2' and may start at TS2' (maybe after T_{wft}). When the first request RQ1 is answered, it has lower priority P1' than the second transfer, and therefore gets only little bandwidth resources until the second transfer T2' is finished.

### 2. Conflicts and Bottlenecks and Their Management, and Approaches of Avoidance

A conflict occurs where two or more operations compete with and exclude each other, so that not all of them can be performed. E.g. a first application may try to delete a piece of content while another application is reading it. Hence, the term "conflict" refers to a systematic conflict in the network system, e.g. DSS, and describes a situation where an intended task cannot be performed. However, there may be ways to overcome the conflict. As a possibility in the above example, the deletion task can be performed after the reading task, or the reading task can be cancelled so that the deletion task can follow.

A bottleneck is a physical constraint, e.g. low throughput rate or storage capacity, high delay etc. It is therefore a limiting factor for a process or task to take place. Hence, within this application the term "bottleneck" refers to a situation where an intended task can be performed, but only with a limitation. Other than a conflict, a bottleneck does not block or prevent a task.

The following sections describe a number of conflicts and bottlenecks and their management. Also approaches towards their avoidance are given.

### 2.1 Conflicts and Their Management

Conflicts may occur e.g. with respect to:
●storage capacity: the storage capacity e.g. of a destination node may not be sufficient for a data transfer;
● transfer rate: the available transfer rate e.g. of a source or destination node may not be sufficient for a data transfer;
●number of transfers: the number of transfers a node can manage may be reached, so that further transfer requests cannot be handled;
●access: two nodes may try to access simultaneously the resources of a third node (e.g. storage capacity, transfer rate, processing power);
●no response: no response may be received where one is expected, e.g. because a node has been unplugged;
●interests of applications or users: a user/application may not be able to access a desired piece of content since the *UseKey* associated with it is unknown;
●previous allocation: when a node requested particular resources from another node, it may receive the answer that sufficient resources are available; but when it tries to allocate the resource, it may be rejected due to a third node having allocated the resources in the meantime;
●node availability: as long as a node is not available in the network, e.g. due to disconnection or temporary power-off, its resources, e.g. content stored on it, are not available to the others; a node may become unavailable while a transfer is running, or even before a scheduled transfer has started.

Messages and control metadata can be used to overcome conflicts in storage capacity. E.g. in order to overcome a storage space conflict, an application or user may decide to delete or move pieces of content of less interest or importance. This may be decided e.g. according to user preferences. Thus, room for new recordings is made. In order to overcome a conflict in transfer rate, data transfers can be performed in succession.

Managing resources can be done continuously as a precaution or only in urgent cases. Resources in a node are allocated as soon as the node receives or launches a respective request, e.g. to be involved in the transfer of content. At this stage, search requests do not yet imply the allocation of resources, as the intention and decision of the user or application is in general not yet known; e.g. several matches may be found and a choice will have to be made. It is however probable that a data transfer will follow. Therefore it is an object of the present invention that an earlier search request leads to a higher priority for the transfer of the search result. This is explained further in the section on priorities for details below. The time of initiation of a search request, i.e. when the *TaskID* is defined, is communicated to the other nodes involved in the task.

In order to improve availability, important pieces of content may be copied and stored redundantly on two or more nodes. Thus, a piece of content that is stored on a certain node that is currently not available can be accessed from another node. This is an issue for the Application Layer or Intermediate Control Layer. E.g. the system may learn or ask what genres a user of an OwnerZone is interested in, and automatically create copies of respective pieces of content. The system could also duplicate pieces of content known to be recorded on removable media, and store them on stationary media that are available in the OwnerZone. For this purpose, software needs to keep track of the times of availability of nodes, and of what users regard as important.

If identical pieces of content are available redundantly on different nodes, they may also be used to overcome certain access or transfer rate conflicts. E.g. if two nodes try to access the same piece of content on a third node, one of them may be redirected to an identical piece of content on another node. If a node has found identical content on different nodes, it can select the node that can provide the highest transfer rate.

If a node that is not the source or destination of a task becomes unavailable while the task is running, this is usually not an issue.
● If a node that initiated a search request becomes unavailable, the other nodes involved in the search task regard the disappearance as a cancellation of the task, and delete the task and its parameters from their task memory.
●If a node that is requested to provide information about content or about its device capabilities becomes unavailable, it will simply not respond. The requesting node accepts this after a timeout.
● If a node that initiated a content transfer but is not the source or destination itself becomes unavailable, it will simply not be reached by the notification messages about start and end of the transfer. After successful transfer, the source and destination nodes delete the task and its parameters from their task memory as usual. When the node that initiated the task becomes available again while the transfer is running, it will be reached by some notification message, and the task will be completed almost as usual. When the node that initiated the task becomes available again after the transfer, it analyses the *TaskInitTime* versus the present time plus the (expected) transfer duration and then deletes the task and its parameters from its task memory; it may check whether the transfer has been completed successfully, by searching for the transferred piece of content on the destination node, and decide whether to try the transfer again if necessary by initiating a new transfer.

If a source or destination node becomes unavailable while a transfer is running, e.g. due to power-off or unplugging, the transfer cannot be completed successfully. Generally, with some exceptions however, the involved nodes shall regard the task as being cancelled and delete the task and its parameters from their task memory as soon as possible. There are different situations and possibilities:
●If the source node becomes unavailable during running transfer, the destination node may (a) delete the content that it has already received; or (b) keep it, assign a new *ContentID* to it, and note the End time or End bit; or (c) keep it, keep the original *ContentID,* and note the End time or End bit, with the intention to try later to resume the transfer. Then it marks the transfer task as interrupted in its task memory. If it is not the source or destination node itself, it shall inform the node that initiated the task about the interruption. It may use a special message like TransferStatusInformation("interrupted"), and wait shortly for a cancellation request from the other node.
   In cases (a) and (b), the destination node and the node that initiated the task then delete the task and its parameters from their task memories; the same holds for the source node when it becomes available again. In case (c), the destination shall keep trying to contact the source node, and as soon as it becomes available again, resume the transfer from the point where it has been interrupted, and inform the node that initiated the task (using a message like TransferStatusInformation("resumed")); if the source node does not become available within a given time period T_{wua} ("wait until available" time, e.g. a week), the destination node and the node that initiated the task shall behave like in case (b).
●If the destination node becomes unavailable during a running transfer, the source node stops sending data, informs the node that initiated the task (unless it is the source or destination node itself) about the interruption, e.g. using a TransferStatusInformation("interrupted") message, and waits a short time for a cancellation request from it. Then it deletes the task and its parameters from its task memory. Depending on which resources are available, the node that initiated the task (not being the source or destination node itself) may (a) try to initiate a transfer of the respective piece of content to another destination node, or (b) wait until the former destination node becomes available again; in the latter case it will keep the task and its parameters in its task memory and mark the transfer as interrupted. If the former destination node becomes available again, it checks its task memory, detects the interruption, tracks up to the point where the transfer has been interrupted, and resumes the transfer from that point by requesting the source node to forward data from that point, and inform the node that initiated the task, using e.g. a TransferStatusInformation("resumed") message. The initiating node may in case (a) cancel the transfer task, with the consequence that the destination node shall delete the already transferred content, or in case (b) behave like during a common transfer, namely waiting for the notification of the task completion.

A transfer may also be scheduled for a specified time. If a node is not available while a scheduled transfer should start, the following situations are possible:
●If the source node is unavailable at the start time of a scheduled transfer, the destination node informs the initiating node (if it is not the source or destination node itself) about the event, e.g. using a message like TransferStatusInformation("not started"). Then it waits a short time for a cancellation request from the initiating node. If it receives no cancellation request, it tries again for a given time period T_{wua} (e.g. an hour or a week) to start the transfer. During this time the initiating node may cancel the task at any time. In case of a cancellation, or when the time period T_{wua} is over, the destination node and the initiating node delete the task and its parameters from their task memories. The source node does the same when it becomes available again. If the source node is available again within T_{wua} and the transfer can successfully be started, the delay is ignored and the usual message flow is used.
●If the destination node is unavailable at the start time of a scheduled transfer, it will not start requesting the source node to forward content to it at the scheduled time. The source node shall inform the initiating node (if it is not the source or destination node itself) about the event using e.g. a TransferStatusInformation("not started") message.
   Depending on the available resources, the initiating node may (a) wait for the destination node to become available again and then start the transfer, or (b) send a cancellation request. In case (b), it may select another destination node. In case (a), the source node and the initiating node keep the task and its parameters in their task memories for a given time period T_{wua} and delete it afterwards. The same holds for the destination node when it is available again. If the destination node is available again within T_{wua}, it requests the source node to forward the data. If the transfer can be started successfully, the usual message flow is used. If now the source node is unavailable, the destination node shall behave as specified above where the source node becomes unavailable.

In any case, any node shall delete any task that is overdue for more than a specified time T_{wua} from its task memory, including its related parameters.

### 2.2 Bottlenecks and Their Management

Bottlenecks may occur, e.g., with respect to:
●storage capacity: a destination nodes storage capacity may not be sufficient for a data transfer to be carried out as requested;
• transfer rate: the free transfer rate (bandwidth) of a source or destination node may not be sufficient for a data transfer to be carried out as requested;
●processing power/time: e.g. a storage node may not be able to perform all received search requests simultaneously or in due time.

Messages and Control Metadata are available to overcome bottlenecks in storage capacity and/or transfer rate. In order to overcome a bottleneck in transfer rate, the application or user may decide to transfer a piece of content - whether it be real-time streaming content or non-real time file content - in non-real time as a file at a lower bit rate so that the transfer time will be longer. As soon as resources become available again, the bit rate can be increased again and the transfer time shortened. Means are available to adjust the bit rate of a file transfer as necessary.

When searching for real-time streaming content in order to transfer it at a low transfer rate, e.g. to a portable or mobile device, a maximum bit rate can be included in the search request. Only devices that hold the required piece of content and that match the bit rate will answer the request. If, in case of a bottleneck in terms of processing power/time, a storage node is not able to perform all received search requests simultaneously or in due time, it communicates periodically that it is still searching. It may manage all of the search requests anyhow, if necessary sequentially.

There are further possibilities mainly on the Application Layer and essentially beyond the scope of the Messages and Control Metadata to overcome bottlenecks. E.g. in case of a bottleneck in terms of transfer rate or storage capacity, an intended real-time streaming transfer for playback or recording purposes may be performed at a decreased bit rate, and therefore degraded in quality, if the node has the ability to do so.

### 2.3 Towards Avoiding Conflicts and Bottlenecks

It needs not always get to a situation where a conflict or bottleneck occurs. Exemplary, the following steps may be taken in advance in order to avoid, or reduce the number of, bottlenecks and conflicts.
● Keep transfer capacity available: In order to have for any node some transfer capacity left available at any time, transfers in the OwnerZone (especially when regarded as a Monolithic Block) should be arranged such that every node has at least capacity for one transfer available (i.e. *MaxStreams - ActiveStreams* being at least 1). An initiating node needs to consider this. In general, in order to have always access to the content stored on a node, the last free transfer of a node should be reserved for playback if possible. When there is a record request and there is only one node available, or only nodes are available that have only one free transfer left, then that node or any one of these nodes shall answer the request and record the content; in all other situations each node should reserve the last free transfer for playback.
   However, care needs to be taken of scheduled transfers, e.g. scheduled transfers may not allocate all possible transfers *(MaxStreams)* of a node simultaneously.
●Keep storage capacity available: In order for any node to have some storage capacity left available possibly at all times, the content stored on the node (or in the whole OwnerZone) may be analysed, and duplicate or similar pieces of content, or content matching other criteria such as rare access or no access, may be offered to the application/user for deletion. Alternatively, the user may be notified and requested to acquire more storage capacity.

When a record request is scheduled, the content stored on a node or in the OwnerZone may be analysed, and the user or the application may be notified if the same or similar content is already stored. The analysis should consider whether the already stored content is complete and of sufficient quality. Then the application may suggest not to perform the new recording, or to delete the other versions e.g. if it has low quality or is incomplete.
●Early warning: A node whose number of free transfers drops down to one may send a DeviceCapabilitiesInformation message around to the other nodes in the OwnerZone.
●Soft unplugging: Whenever possible a node is "soft" unplugged rather than "hard" unplugged, so that it can inform the other nodes about its imminent disappearance. This could be enabled, e.g. by exploiting on an application level the closing of all applications, or a sort of software-based shutdown/disconnect action launched by the user, etc.

The following is a simple scenario describing an application of the invention in a Distributed Storage System, and the Control Language used for distributed storage management including associated Messages and Control Metadata. Different messages or tasks are used along with specific Control Metadata contained in them as message parameters or arguments. For the ease of writing, messages are represented by message name and arguments, e.g.:
DeviceCapabilitiesInformation ( *Sender, Receiver, TaskID, DeviceType, DeviceServices, MaxBitRate, FreeStorageCapacity,* ...).

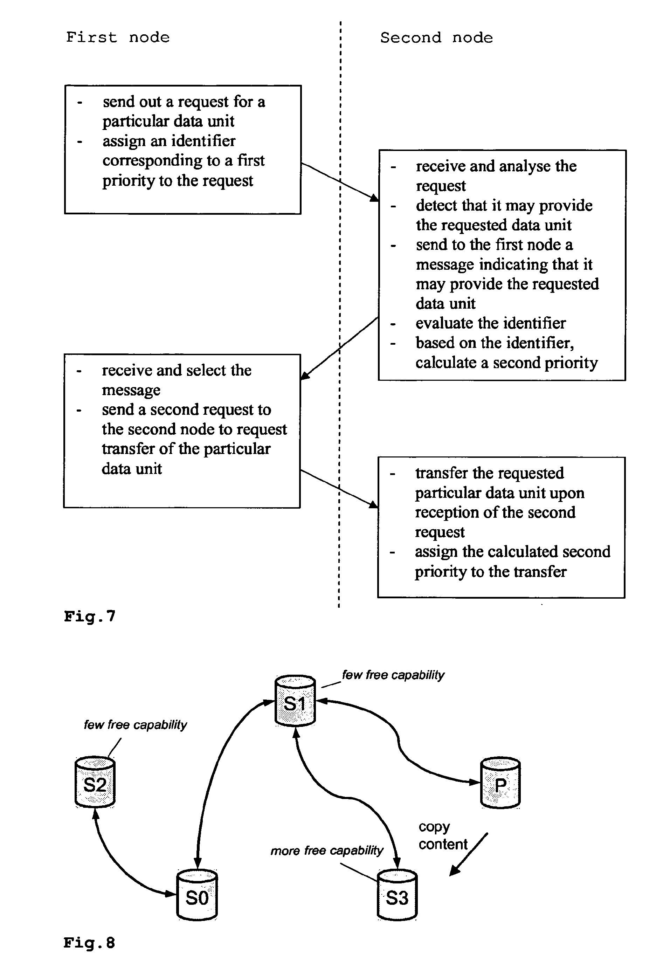

Though every message has its own *MessageID,* the *MessageID* is omitted for simplicity. The scenario is based on an example network (Owner Zone) for distributed storage shown in Fig.8. The network consists of stationary storage devices or nodes S0...S3, e.g. PDR, HDD, optical discs, and a portable storage device or node P. Each node P, SO...S3 may run applications and be equipped with a user interface or remote control which could also be considered as a separate device/node. Possible extensions towards a home network could be a tuner/receiver device (e.g. DVB-S or DVB-C), AV display/output device, ADSL modem or gateway for Internet access, etc. In the example scenario, one node S0 is in general used to interact with the Distributed Storage System. In this scenario, the user wants to copy content in the case of capacity limitations and well-balanced usage of storage capacity in the network. Initially, the network consisting of the nodes S0...S3, P is up and running, no content transfer is taking place and all nodes are idle. The user wants to copy content stored on P to any of the stationary storage devices S1, S2, S3. The content is copied to the stationary device offering the highest amount of free storage capacity.

The user utilises device S0 to search a desired piece of content: device S0 sends a search request message to all devices in the network. Device P receives the message, detects that it contains the content and replies to S0. In a variation to this scenario however, device P could be used instead of S0 to initiate the tasks of searching and copying content. In this case, the node P would not send a reply about content matching the request to itself, it just would get the corresponding information from its content database.

Since the user wants to store the content on any stationary storage device, device S0 is used to ask devices S1, S2 and S3 for their storage and transfer capabilities. S1, S2 and S3 inform S0 about their device capabilities, namely that they all have sufficient free transfer rate available. Limitation in free storage capacity is observed for device S1, while S3 offers the highest amount of free capacity. Device S0 requests P to transfer the content to S3 accordingly, thus making use of the storage capacity available in the network in a well-balanced way. After finishing the associated data transfer, P notifies S3 with a message. After recording the content, S3 informs S0 about the successful completion.

Well-balanced usage of storage capacity in a network, i.e. managing storage space between the nodes, may mean e.g. to record a piece of content on the node offering the highest free transfer rate, or highest absolute or relative free storage capacity as in this scenario. The storage devices in the network can be regarded as one "monolithic block" where the user does not need to distinguish between them. The well-balanced usage of storage capacity, however, is only one possible way for managing the storage capacity in the network. Other strategies could be applied as well when copying content, e.g. in case of capacity limitation.

The following sequence of exemplary messages occurs in this scenario: All messages contain identifiers for the sender and the receiver, and parameters specific to the respective message type.

It is assumed that the user wants to search for a certain piece or type content, e.g. a movie with the title "Octopussy". As a result of his input the S0 device sends the following search request to all devices; since S0 has some pre-knowledge about S2 or is interested in S2 especially, S0 sends the message specifically to S2:
ContentInfoRequest ( *Sender*=NodeID(S0), *Receiver*=all, *Receiver=NodeID(S2), TaskID=abc, TaskInitTime*=2002-12-01-18:10:08.012-GMT, *MessageMode*="search", *SearchString*={*Title*="Octopussy"})

All devices store the association of the *TaskID* and the task-related parameters temporarily and search their databases. P finds the requested piece of content, therefore it sends back the following message to S0:
ContentInfoResponse ( *Sender*=NodeID(P), *Receiver=*NodeID(S0), *TaskID=*abc*, MessageMode=*"found content", *ContentID=*UUID, *LocationID=*UUID, *ContentDescription=*{*Title=*"Octopussy", *Summary="...", Actor*="Roger Moore", *Actor*="Maud Adams", *Actor*="...", *Genre*="Action", *Keyword=*"James Bond", ..., *AspectRatio=*"16:9", ...}, *Duration=*2:05 h, BitRate=7 Mbps, [, more information about the content])

Since "all" receivers have been addressed in the ContentInfoRequest("search") message there is no need for a receiver to respond to the request unless it finds content matching the request, except S2 since it is mentioned explicitly as a receiver: S2 must respond to the request whether it holds the desired content or not. S2 needs some time to search its database and sends the following message to S0 when it begins to search:
ContentInfoResponse (
*Sender*=NodeID(S2), *Receiver*=NodeID(S0), *TaskID=*abc, *MessageMode*="searching")

Devices S2 does not find the requested piece of content. Because S2 has been addressed as a "must respond" receiver in the ContentInfoRequest("search") message, it sends back the following message to device S0, although the desired content was not found in S2:
ContentInfoResponse (
*Sender*=NodeID(S2), *Receiver*=NodeID(SO), *TaskID=abc, MessageMode*="found content", *LocationID*="none")

The user may find the content he searches before the search process of all devices has been completed. He may therefore let S0 cancel the search process using the following message:
**CancelTaskRequest** (
*Sender*=NodeID(S0), *Receiver=all, TaskID=abc)*

After receiving this message, all devices stop their search process. Because S2 has been addressed as a "must respond" receiver in the ContentInfoRequest("search") message, it sends back the following message to S0 to confirm the CancelTaskRequest("search") request:
**CancelTaskResponse (** Sender=NodeID(S2), *Receiver*=NodeID(S0), *TaskID=abc)*

After sending the ContentInfoResponse message to S0, nodes P and S2 delete the *TaskID* and the associated parameters from their temporary memory. The same holds for any device sending a CancelTaskResponse message.

The user is satisfied with the search result, and S0 now sends request messages to S1 S2 and S3 asking for their device capabilities, in order to find out their free storage capacities and transfer rates. Devices S1, S2 and S3 respond by informing S0 about their device capabilities:
**DeviceCapabilitiesInfoRequest** ( *Sender=* NodeID(S0), *TaskID=*bcd, *Receiver=*NodeID(S1))
**DeviceCapabilitiesInformation** ( *Sender*=NodeID(S1), *Receiver=* NodeID(S0), *TaskID=*bcd*, DeviceCapabilityInformation* { *DeviceType*=stationary storage device, *DeviceServices*=record or playback, *MaxCapacity=*100 GB, *FreeCapacity=*5 GB, *MaxTransferRate=*30 Mbps, *FreeTransferRate=*20 Mbps, *MaxStreams=*2 [, *ActiveStreams=*1*, Until*=20:15:00:00]})
**DeviceCapabilitiesInfoRequest** ( Sender= NodeID(S0), *Receiver=*NodeID(S2)*, TaskID=*cde)
**DeviceCapabilitiesInformation** ( *Sender*=NodeID(S2), *Receiver=* NodeID(S0), *TaskID=*cde, *DeviceCapabilityInformation* { *DeviceType=*stationary storage device, *DeviceServices*=record or playback, *MaxCapacity=*50 GB, *FreeCapacity=*40 GB, *MaxTransferRate=*30 Mbps, *FreeTransferRate=*30 Mbps, *MaxStreams=*2})
DeviceCapabilitiesInfoRequest ( *Sender=* NodeID(S0), *Receiver=NodeID(S3), TaskID=def)*
**DeviceCapabilitiesInformation** ( *Sender*=NodeID(S3), *Receiver=* NodeID(S0), *TaskID=def, DeviceCapabilityInformation*{DeviceType=stationary storage device, *DeviceServices=*record or playback, *MaxCapacity=*300 GB, *FreeCapacity=*200 GB, *MaxTransferRate=*40 Mbps, *FreeTransferRate=*40 Mbps, *MaxStreams=*2})

Alternatively, S0 can also send the RequestDeviceCapability message to all three nodes as follows:
**DeviceCapabilitiesInfoRequest** ( *Sender*=NodeID(S0), *Receiver*=NodeID(S1), *Receiver=*NodeID(S2)*, Receiver=*NodeID(S3)*, TaskID=*bcd)*.*

S0 evaluates the free capacities and transfer rates of S1, S2 and S3. S1 does not have sufficient free storage capacity, while S3 offers the highest amount of capacity. In order to make well-balanced use of the storage capacity of the stationary storage devices in the network, S0 automatically selects S3 for recording the content from P, without the user being required to interact, and requests S3 and P to perform the transfer. In variations to this scenario, one Receiver would be omitted and the message would just start:
**InitiateTransferRequest** ( *Sender=*NodeID (P), *Receiver=*NodeID(S3), *TaskID=*fgh, ...) (variation "B": *Destination=*NodeID(P), *Source*=NodeID(S3)).

In this case, node P is allowed to launch this InitiateTransferRequest only if it has the necessary resources available:
**InitiateTransferRequest** ( *Sender=*NodeID(S0), *Receiver=*NodeID(S3)*, Receiver=*NodeID(P)*, TaskID=*fgh*, TransferPurpose="Record", Destination*=NodeID(S3), *Source*=NodeID(P), *ContentID=*UUID*, LocationID=*UUID, *ContentDescription=*{*Title=*"Octopussy"}*, Duration=*2:05 h, [Start=00:00:00:00, End=02:05:00:00,] *RequestedBitRate* =7 Mbps, *UseKey*=Key(John's James Bond friends))

This message requests that the piece of content under the location on node P shall be transferred to node S3 and recorded there. The ContentID is a UUID specifying the location of the piece of content on node P. The TaskID is a UUID and could, e.g., be defined based on the NodeIDs of the devices involved, the location of the content to be transferred, and the time when the task was initiated.
If device P and/or S3 were too busy at the moment according to their *FreeTransferRate,* they would send an **InitiateTransferResponse**("denied") message to S0; the task would then be cancelled by S0 by sending a **CancelTaskRequest** message to P and S3, answered by them through **CancelTaskResponse** messages to S0; or recording could be tried again later or scheduled using the *After* parameter according to the *Until* obtained from the **DeviceCapabilitiesInformation** messages.

After receiving the message above, S3 and P confirm the request and allocate respective resources. The user wants to grant access to the content copy to a certain group of people he manages under the label "John's James Bond friends" defined by himself, and instructs S0 accordingly:
**InitiateTransferResponse** ( *Sender*=NodeID(S3), *Receiver=*NodeID(SO), *Receiver=*NodeID(P)*, TaskID=*fgh*, MessageMode*="confirmed", *TransferPurpose=*"Record", *Destination*=NodeID(S3), *Source*=NodeID(P), *ContentID*=UUID, *LocationlD=UUID, ContentDescription*={Title="Octopussy"}, [*Start*=00:00:00:00, *End*=02:05:00:00,] *ReservedBitRate=7* Mbps, *UseKey*=Key(John's James Bond friends))
**InitiateTransferResponse** ( *Sender*=NodeID(P), *Receiver=*NodeID(S0), *Receiver=*NodeID(S3)*, TaskID=*fgh, *MessageMode=*"confirmed", *TransferPurpose=*"Record"*, Destination=*NodeID(S3)*,* Source=NodeID(P), *ContentID=*UUID, *LocationID=*UUID, *ContentDescription=*{*Title*="Octopussy"}, [Start=00:00:00:00, End=02:05:00:00,] *ReservedBitRate=7* Mbps, *UseKey*=Key(John's James Bond friends))

Since the value of the *TransferPurpose* parameter is "Record", the *Destination* node S3 will control the data forwarding process: S3 then (or later, according to the After parameter) requests P to send the respective content data to it:
**ForwardDataRequest (** *Sender=NodeID* (S3) , *Receiver=NodeID (P) , TaskID=fgh, ContentlD=UUID, LocationID=*UUID, [*ContentDescription=*{Title="Octopussy"},] [*Start*=00:00:00:00, *End*=02:05:00:00])

Device P receives the request from S3, and sends the following response message to S3 accompanied with the requested content, thus starting to transfer content data from P to S3:
**ForwardDataResponse** ( *Sender=*NodeID(P)*, Receiver=*NodeID (S3), *TaskID=*fgh*, ContentID=*UUID, *LocationID=*UUID*,* [*ContentDescription=*{Title="Octopussy"},] [Start=00:00:00:00, End=02:05:00:00,] BitRate=7 Mbps, *Content)*

S3 now informs S0 about the start of the recording process so that the user can be notified:
**TransferStatusInformation** ( *Sender*=NodeID(S3), *Receiver=*NodeID(S0)*, TaskID=*fgh*, MessageMode=*"starting" [, *TransferPurpose=*"Record", *Destination*=NodeID(S3), Source=NodeID(P), *ContentID=*UUID, *LocationID=*UUID, *ContentDescription=*{*Title*="Octopussy"}] [, Start=00:00:00:00, End=02:05:00:00] [, BitRate=7 Mbps])

Since S3 controls the transfer (starting it through the ForwardDataRequest message), S3 sends the TransferStatusInformation("starting") message to S0. When P finishes the data transfer, it sends the following information message to S3, thus confirming that the complete data have been transferred. If this message would not be received, S3 could use this fact as an indication that the transfer was incomplete due to some reason, e.g. due to forced device unplugging:
TransferStatusInformation ( *Sender=NodeID (P) , Receiver=NodeID* (S3) , *TaskID=fgh, MessageMode=*"end of data", *ContentID*=UUID, *LocationlD=UUID* [, *ContentDescription={Title="*Octopussy"}] [, Start=00:00:00:00, End=02:05:00:00])

S3 finishes the recording and sends the following information message about the successful completion of the recording to S0 so that it can notify the user:
**TransferStatusInformation** ( *Sender*=NodeID(S3), *Receiver*=NodeID(S0), *TaskID=fgh, MessageMode*="completed" [, *TransferPurpose=*"Record", *Destination*=NodeID(S3), *Source*=NodeID(P), *ContentlD=UUID, LocationID--UUID, ContentDescription=*{*Title="Octopussy"}]* [, *Start*=00:00:00:00, *End*=02:05:00:00] [, *Duration*=02:05 h, *BitRate*=7 Mbps] [, *StorageSpace=6.11* GB])

Devices P and S3 deallocate their resources, and S0 now notifies the user about the successful completion of the transfer task.

The invention can be applied to all networking fields where conflicts or bottlenecks may occur and should be limited. Examples are networks based on peer-to-peer technology, such as e.g. OwnerZones, or Universal Plug and Play (UPnP) technology.

## Claims

1. A method for assigning a priority to a data transfer in a network, the data transfer comprising
- a first node sending out a first request, the first request containing an indication of a particular data unit or type of data units, the indication referring to a mark associated with the data unit or data units;
- at least a second node receiving and analysing the first request;
- the second node detecting that it may provide the requested data unit, and sending to the first node a first message indicating that it may provide the requested data unit;
- the first node receiving and selecting the first message;
- the first node sending a second request at least to the second node, requesting transfer of the particular data unit, **characterised in that**, the first node assigns an identifier to the first request and/or the second request, the identifier corresponding to a first priority;
- the second node evaluating the identifier corresponding to the first priority and, based on the identifier, calculating a second priority, wherein said calculated second priority contains a first-layer and a second-layer partial priority, the first-layer partial priority depending on a type of requested data transfer and being defined automatically, and the second-layer partial priority being user or application defined, wherein the type of requested data transfer comprises at least recording, playback, real-time streaming and non-real-time transfer; and
- the second node transmitting the particular data unit in a first transfer upon reception of the second request, wherein the calculated second priority is assigned to said first transfer.

2. Method according to claim 1, wherein evaluating said identifier corresponding to a priority assigned to requests and/or data transfers in the network comprises first comparing the first-layer partial priorities, and comparing the second-layer partial priorities if the first-layer partial priorities are equal.

3. Method according to claim 1 or 2, further comprising the steps of
- the first node assigning a timestamp to the first request; and
- the second node evaluating the timestamp for calculating the second priority.

4. Method according to the preceding claim, wherein the second node performs the further steps of
- calculating, upon receipt of the second request, the difference between the timestamp time and the current time;
- comparing said difference with a predefined value;
- selecting a first algorithm if said difference is below the predefined value and a different second algorithm otherwise; and
- calculating according to the selected algorithm the value for the second priority.

5. Method according to any of the preceding claims, further comprising the step of
- the second node receiving and scheduling a further request from another node and/or directed to another node and detecting the priority assigned to the further request, wherein said further request results in a further transfer on said network;
- the second node starting said first transfer either before, during or after said further transfer, depending on said detected priority and on said calculated priority.

6. Method according to the preceding claim, wherein not enough resources are available for simultaneously performing said first transfer and said further transfer, further comprising the steps of
- comparing the first-layer priorities of the two transfers;
- starting the first transfer if its first-layer priority is higher than the first-layer priority of the further transfer, or if both first-layer priorities are equal and its second-layer priority is higher than the second-layer priority of the further transfer; and
- otherwise delaying the first transfer if it is a real-time transfer, or starting said first transfer if it is a non-real-time transfer and may use the remaining resources.

7. Method according to any of the preceding claims, wherein a user or an application may modify said second-layer priority, but not the first-layer priority.

8. Method according to any of the preceding claims, wherein a running transfer may not be interrupted.

9. Method according to any of the preceding claims, wherein the second node may receive a plurality of first requests, and responds to said requests with a plurality of first messages, the first messages being sequentially ordered according to the timestamps of their individual corresponding first request.

10. Network node comprising
- means for receiving and analysing a first request, the first request indicating a first node being the sender and a particular data unit;
- means for detecting that the requested data unit is available to the network node;
- means for sending to the first node a first message indicating that the network node may provide the requested data unit;
- means for receiving a second request, the second request requesting transfer of the particular data unit; **characterised by,**
- means for evaluating a first priority associated with the first request;
- means for calculating a second priority based on the first priority, the second priority containing a first-layer and a second-layer partial priority, the first-layer partial priority depending on a type of request or data transfer and being defined automatically, and the second-layer partial priority being user or application defined, wherein the type of request or data transfer comprises at least recording, playback, real-time streaming and non-real-time transfer;
- means for assigning the second priority to the transfer of the particular data unit; and
- means for transmitting the particular data unit upon reception of the second request.

11. Network node according to the preceding claim, further comprising means for evaluating the priority assigned to requests and/or data transfers, wherein said evaluating comprises first comparing the first-layer partial priorities, and comparing the second-layer partial priorities if the first-layer partial priorities are equal.

12. Network node according to claim 10 or 11, further comprising
- means for evaluating the timestamp for calculating the second priority, wherein the second priority is the higher the older the timestamp is;
- means for calculating, upon receipt of the second request, the difference between the timestamp time and the current time;
- means for comparing said difference with a predefined value;
- means for selecting a first algorithm if said difference is below the predefined value, or a different second algorithm otherwise; and
- means for calculating according to the selected algorithm the value for the second priority.

13. Network node according to any of claims 10-12, further comprising
- means for receiving a request from a user, an application or another network node; and
- means for modifying the calculated second priority upon said request.

## Patentansprüche

1. Verfahren zur Zuordnung einer Priorität zu einer Datenübertragung in einem Netzwerk, wobei die Datenübertragung umfasst:
- einen ersten Knoten, der eine erste Anforderung aussendet, die eine Angabe einer besonderen Dateneinheit oder des Typs von Dateneinheiten enthält, wobei die Angabe sich auf eine Markierung bezieht, die der Dateneinheit oder den Dateneinheiten zugeordnet ist;
- wenigstens einen zweiten Knoten, der die erste Anforderung empfängt und analysiert;
- wobei der zweite Knoten feststellt, dass er die angeforderte Dateneinheit liefern kann und an den ersten Knoten eine Nachricht sendet, die anzeigt, dass er die angeforderte Dateneinheit liefern kann;
- wobei der erste Knoten die erste Nachricht empfängt und auswählt;
- wobei der erste Knoten eine zweite Anforderung an mindestens den zweiten Knoten sendet, mit der die Übertragung der besonderen Dateneinheit angefordert wird, **dadurch gekennzeichnet, dass**:
- der erste Knoten der ersten Anforderung und/oder der zweiten Anforderung einen Identifizierer zuordnet, der einer ersten Priorität entspricht;
- der zweite Knoten den Identifizierer, der der ersten Priorität entspricht, auswertet und auf der Basis des Identifizierers eine zweite Priorität berechnet, wobei die berechnete zweite Priorität eine Teil-Priorität für eine erste Schicht und für eine zweite Schicht enthält, und die Teil-Priorität der ersten Schicht von einem Typ einer angeforderten Datenübertragung abhängt und automatisch definiert wird, und die Teil-Priorität der zweiten Schicht durch Benutzer oder Anwendung definiert wird, wobei der Typ der angeforderten Datenübertragung wenigstens Aufzeichnung, Wiedergabe, Echtzeit-Streaming und Nicht- Echtzeit-Übertragung umfasst; und
- wobei der zweite Knoten die besondere Dateneinheit in einer ersten Übertragung bei Empfang der zweiten Anforderung sendet, wobei die berechnete zweite Priorität der ersten Übertragung zugeordnet wird.

2. Verfahren nach Anspruch 1, bei dem die Auswertung des Identifizierers entsprechend einer Anforderungen und/oder Datenübertragungen in dem Netzwerk zugeordneten Priorität zuerst den Vergleich der ersten Teil-Prioritäten der ersten Schicht umfasst, und wenn die Teil-Prioritäten der ersten Schicht gleich sind, den Vergleich der Teil-Prioritäten der zweiten Schicht umfasst.

3. Verfahren nach Anspruch 1 oder 2, das ferner die Schritte umfasst:
- Zuordnen eines Zeitstempels zu der ersten Anforderung durch den ersten Knoten;
- Auswerten des Zeitstempels zur Berechnung der zweiten Priorität durch den zweiten Knoten.

4. Verfahren nach dem vorhergehenden Anspruch, bei dem der zweite Knoten die weiteren Schritte ausführt:
- Berechnen des Unterschiedes zwischen dem Zeitstempel und der aktuellen Zeit bei Empfang der zweiten Anforderung;
- Vergleichen des Unterschiedes mit einem vorbestimmten Wert;
- Auswählen von einem ersten Algorithmus, wenn der Unterschied unter dem vorbestimmten Wert liegt, andernfalls von einem unterschiedlichen zweiten Algorithmus; und
- Berechnen des Wertes für die zweite Priorität gemäß dem ausgewählten Algorithmus.

5. Verfahren nach einem der vorhergehenden Ansprüche, das ferner die Schritte umfasst:
- Empfangen und Planen einer weiteren Anforderung von einem weiteren Knoten und/oder zu einem weiteren Knoten durch den zweiten Knoten und Feststellen der der weiteren Anforderung zugeordneten Priorität, wobei die weitere Anforderung zu einer weiteren Übertragung in dem Netzwerk führt;
- Beginnen der ersten Übertragung entweder vor, während oder nach der weiteren Übertragung durch den zweiten Knoten in Abhängigkeit von der festgestellten Priorität und der berechneten Priorität.

6. Verfahren nach dem vorhergehenden Anspruch, wobei nicht genügend Betriebsmittel für die gleichzeitige Ausführung der ersten Übertragung und der zweiten Übertragung verfügbar sind, das ferner die Schritte umfasst:
- Vergleichen der Prioritäten der ersten Schicht der beiden Übertragungen;
- Beginnen der ersten Übertragung, wenn ihre Priorität der ersten Schicht höher ist als die Priorität der ersten Schicht der weiteren Übertragung, oder wenn beide Prioritäten der ersten Schicht gleich sind und ihre Priorität der zweiten Schicht höher als die Priorität der zweiten Schicht der weiteren Übertragung ist; und
- Andernfalls Verzögern der ersten Übertragung, wenn es eine Echtzeit-Übertragung ist, oder Beginnen der ersten Übertragung, wenn es eine Nicht-Echtzeit-Übertragung ist, wobei die verbleibenden Betriebsmittel verwendet werden können.

7. Verfahren nach einem der vorhergehenden Ansprüche, bei dem ein Benutzer oder eine Anwendung die Priorität der zweiten Schicht, aber nicht die Priorität der ersten Schicht modifizieren kann.

8. Verfahren nach einem der vorhergehenden Ansprüche, bei dem eine laufende Übertragung nicht unterbrochen werden darf.

9. Verfahren nach einem der vorhergehenden Ansprüche, bei dem der zweite Knoten mehrere erste Anforderungen erhalten kann und auf die Anforderungen mit mehreren ersten Nachrichten antwortet, wobei die ersten Nachrichten sequentiell nach den Zeitstempeln ihrer individuellen entsprechenden ersten Anforderung geordnet werden.

10. Netzwerk-Knoten, umfassend:
- Mittel zum Empfangen und Analysieren einer ersten Anforderung, wobei die erste Anforderung anzeigt, dass ein erster Knoten der Sender und eine besondere Dateneinheit ist;
- Mittel zum Feststellen, dass die angeforderte Dateneinheit für den Netzwerk-Knoten verfügbar ist;
- Mittel zum Senden einer ersten Nachricht an den ersten Knoten, die anzeigt, dass der Netzwerk-Knoten die angeforderten Dateneinheit liefern kann;
- Mittel zum Empfangen einer zweiten Anforderung, die die Übertragung der besonderen Dateneinheit anfordert; **gekennzeichnet durch**:
- Mittel zum Auswerten einer ersten Priorität, die der ersten Anforderung zugeordnet ist;
- Mittel zur Berechnung einer zweiten Priorität auf der Basis der ersten Priorität, wobei die zweite Priorität eine Teil-Priorität für eine erste Schicht und eine Teil-Priorität für eine zweite Schicht enthält, wobei die Teil-Priorität der ersten Schicht von einem Typ der Anforderung oder Datenübertragung abhängt und automatisch definiert wird, und die Teil-Priorität der zweiten Schicht vom Benutzer oder der Anwendung definiert wird, wobei der Typ der Anforderung oder Datenübertragung wenigstens Aufzeichnung, Wiedergabe, Echtzeit-Streaming und Nicht-EchtzeitÜbertragung umfasst;
- Mittel zum Zuordnen der zweiten Priorität zu der Übertragung der besonderen Dateneinheit; und
- Mittel zum Senden der besonderen Dateneinheit bei Empfang der zweiten Anforderung.

11. Netzwerk-Knoten nach dem vorhergehenden Anspruch, der ferner Mittel zum Auswerten der den Anforderungen und/oder Datenübertragungen zugeordneten Priorität umfassen, wobei die Auswertung zuerst den Vergleich der Teil-Prioritäten der ersten Schicht umfasst und den Vergleich der Teil-Prioritäten der zweiten Schicht, wenn die Teil-Prioritäten der ersten Schicht gleich sind.

12. Netzwerk-Knoten nach Anspruch 10 oder 11, der ferner umfasst:
- Mittel zur Auswertung des Zeitstempels zur Berechnung der zweiten Priorität, wobei die zweite Priorität umso höher ist, je älter der Zeitstempel ist;
- Mittel zum Berechnen des Unterschieds zwischen der Zeitstempel-Zeit und der aktuellen Zeit bei Empfang der zweiten Anforderung;
- Mittel zum Vergleich des Unterschieds mit einem vor-definierten Wert;
- Mittel zum Auswählen von einem ersten Algorithmus wenn der Unterschied unter dem vor-definierten Wert liegt, oder sonst von einem unterschiedlichen zweiten Algorithmus; und
- Mittel zum Berechnen des Wertes für die zweite Priorität gemäß dem ausgewählten Algorithmus.

13. Netzwerk-Knoten nach einem der Ansprüche 10 bis 12, ferner umfassend:
- Mittel zum Empfangen einer Anforderung von einem Benutzer, einer Anwendung oder einem anderen Netzwerk-Knoten; und
- Mittel zum Modifizieren der berechneten zweiten Priorität nach der Anforderung.

## Revendications

1. Procédé d'assignation de priorités au transfert de données dans un réseau, le transfert de données comprenant
- un premier noeud envoyant une première demande, la première demande contenant une indication d'une unité de données particulière ou d'un type d'unités de données, l'indication se rapportant à une marque associée à l'unité de données ou aux unités de données ;
- au moins un deuxième noeud recevant et analysant la première demande ;
- le deuxième noeud détectant qu'il peut fournir l'unité de données demandée, et envoyant au premier noeud un premier message indiquant qu'il peut fournir l'unité de données demandée ;
- le premier noeud recevant et sélectionnant le premier message ;
- le premier noeud envoyant une deuxième demande au moins au deuxième noeud, demandant un transfert de l'unité de données particulière, **caractérisé en ce que** le premier noeud assigne un identifiant à la première demande et/ou à la deuxième demande, l'identifiant correspondant à une première priorité ;
- le deuxième noeud évaluant l'identifiant correspondant à la première priorité et, en se basant sur l'identifiant, calculant une deuxième priorité, où ladite deuxième priorité calculée contient une priorité partielle de première couche et de deuxième couche, la priorité partielle de première couche dépendant d'un type de transfert de données demandé et étant définie automatiquement, et la priorité partielle de deuxième couche étant définie par un utilisateur ou une application, où le type de transfert de données demandé comprend au moins un enregistrement, une reproduction, un transfert différé et de flux en temps réel ; et
- le deuxième noeud transmettant l'unité de données particulière dans un premier transfert suite à une réception de la deuxième demande, où la deuxième priorité calculée est assignée audit premier transfert.

2. Procédé selon la revendication 1, dans lequel une évaluation dudit identifiant correspondant à une priorité assignée à des demandes et/ou des transferts de données sur le réseau comprend une première comparaison des priorités partielles de première couche et une comparaison des priorités partielles de deuxième couche si les priorités partielles de première couche sont identiques.

3. Procédé selon la revendication 1 ou 2, comprenant en outre les étapes suivantes :
- le premier noeud assignant une estampille temporelle à la première demande; et
- le deuxième noeud évaluant l'estampille temporelle pour calculer la deuxième priorité.

4. Procédé selon la revendication précédente, dans lequel le deuxième noeud effectue les étapes supplémentaires consistant à :
- calculer, après réception de la deuxième demande, la différence entre l'heure de l'estampille temporelle et l'heure actuelle ;
- comparer ladite différence avec une valeur prédéfinie ;
- sélectionner un premier algorithme si ladite différence est inférieure à la valeur prédéfinie et un deuxième algorithme différent dans le cas contraire ; et
- calculer selon l'algorithme sélectionné la valeur de la deuxième priorité.

5. Procédé selon une quelconque des revendications précédentes, comprenant en outre les étapes suivantes :
- le deuxième noeud recevant et planifiant une demande supplémentaire provenant d'un autre noeud et/ou dirigée vers un autre noeud et détectant la priorité assignée à la demande supplémentaire, où ladite demande supplémentaire aboutit à un transfert supplémentaire sur ledit réseau ;
- le deuxième noeud commençant ledit premier transfert avant, pendant ou après ledit transfert supplémentaire, en fonction de ladite priorité détectée et de ladite priorité calculée.

6. Procédé selon la revendication précédente, dans lequel des ressources disponibles sont insuffisantes pour effectuer simultanément ledit premier transfert et ledit transfert supplémentaire, comprenant en outre les étapes de
- comparaison des priorités de première couche des deux transferts ;
- démarrage du premier transfert si sa priorité de première couche est supérieure à la priorité de première couche du transfert supplémentaire, ou si les deux priorités de première couche sont égales et que sa priorité de deuxième couche est supérieure à la priorité de deuxième couche du transfert supplémentaire ; et
- dans le cas contraire retard du premier transfert s'il s'agit d'un transfert en temps réel, ou démarrage dudit premier transfert s'il s'agit d'un transfert en différé et qu'il peut utiliser les ressources restantes.

7. Procédé selon une quelconque des revendications précédentes, dans lequel un utilisateur ou une application peut modifier ladite priorité de deuxième couche, mais pas la priorité de première couche.

8. Procédé selon une quelconque des revendications précédentes, dans lequel un transfert en cours ne peut pas être interrompu.

9. Procédé selon une quelconque des revendications précédentes, dans lequel le deuxième noeud peut recevoir une pluralité de premières demandes, et répond auxdites demandes par une pluralité de premiers messages, les premiers messages étant classés de manière successive selon les estampilles temporelles de leur première demande correspondante individuelle.

10. Noeud de réseau comprenant
- un moyen pour recevoir et analyser une première demande, la première demande indiquant un premier noeud comme étant l'émetteur et une unité de données particulière :
- un moyen pour détecter que l'unité de données demandée est disponible sur le noeud de réseau ;
- un moyen pour envoyer au premier noeud un premier message indiquant que le noeud de réseau peut fournir l'unité de données demandée ;
- un moyen pour recevoir une deuxième demande, la deuxième demande demandant un transfert de l'unité de données particulière ; **caractérisé par**,
- un moyen pour évaluer une première priorité associée à la première demande ;
- un moyen pour calculer une deuxième priorité en se basant sur la première priorité, la deuxième priorité contenant une priorité partielle de première couche et de deuxième couche, la priorité partielle de première couche dépendant d'un type de demande ou de transfert de données et étant définie automatiquement, et la priorité partielle de deuxième couche étant définie par un utilisateur ou une application, où le type de demande ou de transfert de données comprend au moins un enregistrement, une reproduction, un transfert différé et de flux en temps réel ;
- un moyen pour assigner la deuxième priorité au transfert de l'unité de données particulière ; et
- un moyen pour transmettre l'unité de données particulière après réception de la deuxième demande.

11. Noeud de réseau selon la revendication précédente, comprenant en outre un moyen pour évaluer la priorité assignée à des demandes et/ou des transferts de données, où ladite évaluation comprend une première comparaison des priorités partielles de première couche et une comparaison des priorités partielles de deuxième couche si les priorités partielles de première couche sont identiques.

12. Noeud de réseau selon la revendication 10 ou 11, comprenant en outre
- un moyen pour évaluer l'estampille temporelle pour calculer la deuxième priorité, où plus la deuxième priorité est élevée plus l'estampille temporelle est ancienne ;
- un moyen pour calculer, après réception de la deuxième demande, la différence entre l'heure de l'estampille temporelle et l'heure actuelle ;
- un moyen pour comparer ladite différence avec une valeur prédéfinie ;
- un moyen pour sélectionner un premier algorithme si ladite différence est inférieure à la valeur prédéfinie, ou un deuxième algorithme différent dans le cas contraire ; et
- un moyen pour calculer selon l'algorithme sélectionné la valeur de la deuxième priorité.

13. Noeud de réseau selon les revendications 10 à 12, comprenant en outre
- un moyen pour recevoir une demande d'un utilisateur, d'une application ou d'un autre noeud de réseau ; et
- un moyen pour modifier la deuxième priorité calculée suite à ladite demande.
